# EUROPÄISCHE PATENTSCHRIFT

(11) **EP 1 769 889 B1**
(45) Veröffentlichungstag und Bekanntmachung des Hinweises auf die Patenterteilung: **02.12.2009**
(21) Anmeldenummer: 06019719.1
(22) Anmeldetag: 21.09.2006
(51) Int. Cl.: B25J 9/04, B25J 19/00

(54) **Vorrichtung zum Heben und Drehen von Behältern in einer Reinraumumgebung**
Device for lifting and turning containers in a clean room environment
Dispositif pour lever et tourner des conteneurs dans un environnement de salle blanche

(30) Priorität: 29.09.2005 DE 102005046838
(43) Veröffentlichungstag der Anmeldung: 04.04.2007
(73) Patentinhaber: Atec Pharmatechnik Gmbh, 24966 Sörup (DE)
(72) Erfinder: Hans-Werner, Mumm, 24966 Sörup (DE)
(74) Vertreter: Thomas, Götz

(56) Entgegenhaltungen:
- EP-A1- 0 527 121
- WO-A-02/086637
- DE-U1- 9 300 391
- US-A- 5 293 107
- US-A1- 2003 040 841
- US-A1- 2003 114 961

## Beschreibung

Die Erfindung betrifft eine Vorrichtung zum Heben und Drehen von Behältern in einer Reinraumumgebung, mit einer ortsfesten Tragsäule und einer Halterung zur Aufnahme der Behälter, die in Bezug zur Tragsäule auf und ab beweglich und um eine horizontale Drehachse drehbar ist.

Eine Vorrichtung dieser Art wird unter der Bezeichnung Behälter-Hubsäule von der Firma SERVOLIFT GmbH unter http://www.servolift.de angeboten. Bei der bekannten Vorrichtung wird der Behälter zumeist mit Hilfe eines im Inneren der Hubsäule untergebrachten Hydraulikzylinders vertikal angehoben und mit Hilfe eines hydraulischen Drehantriebs der Halterung um die horizontale Drehachse gedreht. An der zur Halterung benachbarten Seite ist die Hubsäule durch eine nachgiebige Abdeckung verschlossen, die jeweils in Höhe eines Verbindungselements zwischen dem Hydraulikzylinder und der Halterung abgehoben werden muss, um eine Wanderöffnung für das beim Anheben bzw. Absenken der Halterung mitbewegte Verbindungselement bereit zu stellen. Eine solche Wanderöffnung ist jedoch unter Reinraumgesichtspunkten sehr ungünstig, da sie sich nicht ausreichend gas- und flüssigkeitsdicht abdichten lässt.

Eine ähnliche Hubvorrichtung für Reinraumumgebungen mit der Bezeichnung Nybergs Hoist wird von der Firma Nybergs Maskin AB, Falun, Schweden, unter http://www.nybergs.com angeboten.

Weiter ist aus der DE 199 16 720 A1 eine als Transportwagen für Reinraumumgebungen ausgebildete Hubvorrichtung für Behälter ohne drehbare Halterung bekannt. Die bekannte Hubvorrichtung weist eine Hubsäule auf, die von einem Faltenbalg umgeben ist, was wegen des nachgiebigen Materials und der vielen Oberflächen des Balgs unter Reinraumgesichtspunkten ebenfalls äußerst ungünstig ist.

Die US-A-2003/011496 offenbart eine dem Oberbegriff des Anspruchs 1 entsprechende Robotervorrichtung zum Anheben und Umsetzen von Gegenständen, bei der die Halterung mittels eines Riementriebs vom Drehantrieb des Gelenkarms angetrieben wird.

Ausgehend hiervon liegt der Erfindung die Aufgabe zugrunde, mit einfachen Mitteln die Anrichtung des aufgenormenen Behälters um eine horizontale Achse beliebig zu veränderen und eine gute Abdichtung der Vorrichtung zur Reinraumumgebung hin zu gewährleisten.

Diese Aufgabe wird durch die Merkmalskombination des Anspruchs 1 gelöst.

Der Erfindung liegt der Gedanke zugrunde, auch die Halterung mit einem Drehantrieb zu versehen, um durch Ansteuerung der beiden eigenen Drehantriebe des Gelenkarms und der Halterung die Ausrichtung des Behälters entlang des Schwenkwegs des Gelenkarms beliebig zu verändern.

Da nicht nur die Drehung des Behälters bzw. der Halterung sondern auch das Anheben und Absenken des Behälters bzw. der den Behälter tragenden Halterung über eine Dreh- bzw. Schwenkbewegung des Gelenkarms vorgenommen wird, lässt, sich das für eine solche Dreh- bzw. Schwenkbewegung benötigte Drehgelenk erheblich einfacher als eine Wanderöffnung zu einer Reinraumumgebung hin abdichten.

Durch die erfindungsgemäße Merkmalskombination können für das Anheben bzw. Absenken des Behälters und das Drehen des Behälters dieselben Drehantriebe verwendet werden, die sich zum einen gegenüber der Reinraumumgebung abgedichtet im Inneren einer Tragsäule bzw. des Gelenkarms unterbringen lassen und zum anderen sämtlich eine gleiche Bauart aufweisen können, wodurch die Wartung vereinfacht und die Anzahl der verschiedenen Bauteile der Vorrichtung verringert werden kann.

Ein weiterer Vorteil der erfindungsgemäßen Merkmalskombination besteht darin, dass die Vorrichtung einschließlich des mindestens einen Gelenkarms vollständig mit Blechen aus Edelstahl verkleidet werden kann. Dies hat nicht nur unter dem Gesichtpunkt einer potentiellen Anhaftung von Verunreinigungen Vorteile gegenüber Vorrichtungen mit Begrenzungswänden in Form von nachgiebigen Abdeckungen oder Faltenbälgen, sondern auch im Hinblick auf die Reinigung oder Desinfektion dieser Oberflächen mit aggressiven Reinigungs- oder Desinfektionsmitteln. Insbesondere unter dem zuerst genannten Gesichtspunkt ist es auch von Vorteil, wenn nach oben weisende Begrenzungswände der Tragsäule und des mindestens einen Gelenkarms gemäß einer weiteren Ausgestaltung der Erfindung mindestens teilweise gerundet ausgebildet werden, und/oder wenn die Begrenzungswände mit glatten äußeren Oberflächen versehen und mindestens teilweise mittels Magneten befestigt werden, um jegliche über die Oberflächen überstehende Vorsprünge, wie Schraubenköpfe oder Nieten, zu vermeiden.

Der Gelenkarm und die Halterung werden mittels zugehöriger elektrischer Antriebsmotoren der Drehantriebe verschwenkt, die den Gelenkarm bzw. die Halterung über ein Untersetzungsgetriebe antreiben, wobei zweckmäßig der Drehantrieb des Gelenkarms im Inneren der Tragsäule und der Drehantrieb der Halterung im Inneren des Gelenkarms untergebracht ist.

Die Drehantriebe umfassen vorzugsweise eine Getriebestufe mit selbsthemmenden Eigenschaften, vorzugsweise Schneckengetriebestufe, die beim Anhalten der Schwenk- bzw. Drehbewegung des mindestens einen Gelenkarms bzw. der Halterung für eine selbsttätige Arretierung sorgt. Die jeweilige Schneckengetriebestufe weist zweckmäßig ein mit einer Abtriebswelle des Drehantriebs verbundenes Schneckenrad auf, das mit einer koinplementären Verzahnung am äußeren Umfang eines Hohlrades im Zahneingriff steht, das zum Beispiel bei dem Drehgelenk zwischen der Tragsäule und dem Gelenkarm bzw. dem ersten Gelenkarm drehbar in der Tragsäule gelagert und drehfest mit dem Gelenkarm bzw. mit dem ersten Gelenkarm verbunden ist. Die Kraftübertragung an den anderen Drehgelenken erfolgt in der gleichen Weise, wobei das Hohlrad und die angetriebene Komponente, zum Beispiel ein Gelenkarm oder die Halterung, zweckmäßig durch einen Kranz von Schraubenbolzen miteinander verbunden sind.

Um die Abdichtung der Drehgelenke zu erleichtern, ist der Gelenkarm zweckmäßig an einer Seite der Tragsäule angelenkt, während die Halterung ebenfalls über eine Seite des Gelenkarms übersteht, wobei ihre Drehachse und damit auch die Schwenkachse des Gelenkarms zu diesen Seiten senkrecht sind.

Um das Aufnehmen von Behältern zu erleichtern, steht die Halterung bevorzugt über die von der Tragsäule abgewandte Seite des Gelenkarms über.

Um im Bereich der Drehgelenke für eine ausreichende Abdichtung der Vorrichtung zu sorgen, ist dort jeweils zwischen zwei gegenüberliegenden äußeren Oberflächen von Begrenzungswänden der durch das Drehgelenk verbundenen Komponenten, wie zum Beispiel der Tragsäule und des Gelenkarms, ein zur Drehachse des Drehgelenks konzentrischer Dichtring angeordnet, der die drehfeste Verbindung zwischen dem Hohlrad im Innenraum der einen Komponente und einer stabilen Montageplatte im Innenraum der anderen Komponente umgibt und im Fall der Tragsäule und der Gelenkarme für eine Abdichtung der kommunizierenden Innenräume benachbarter Teile gegenüber der Reinraumumgebung sorgt.

Das Hohlrad und die drehfest mit dem Hohlrad verbundene Montageplatte sowie der Kranz von Schraubenbolzen umgeben eine Durchtrittsöffnung, durch die Strom- und Steuerkabel zu den weiter von der Tragsäule entfernten Drehantrieben verlegt werden können.

Im folgenden wird die Erfindung anhand Ausführungsbeispiels näher erläutert. Es zeigen:
Die Figuren 1a, b und c: perspektivische Ansichten einer erfindungsgemäßen Vorrichtung mit einer Tragsäule und einem einzigen Gelenkarm, die einen von der Vorrichtung aufgenommenen Behälter in verschiedenen Hub- und Drehstellungen zeigen;
die Figuren 2a und b: Vorderseitenansichten der Vorrichtung aus Fig. 1 ohne den Behälter;
Fig. 3 eine perspektivische Ansicht der Vorrichtung aus den Figuren 1 und 2 mit abgenommenen Begrenzungswänden;
Fig. 4 eine Schnittansicht durch einen Teil eines Drehgelenks zwischen der Tragsäule und dem Gelenkarm;
die Figuren 5 a, b und c: perspektivische Ansichten einer nicht der Erfindung zugehörigenVorrichtung mit zwei Gelenkarmen, die einen von der Vorrichtung aufgenommenen Behälter vor und bei dem Entleeren in eine Entleerstation in verschiedenen Hub- und Drehstellungen zeigen.

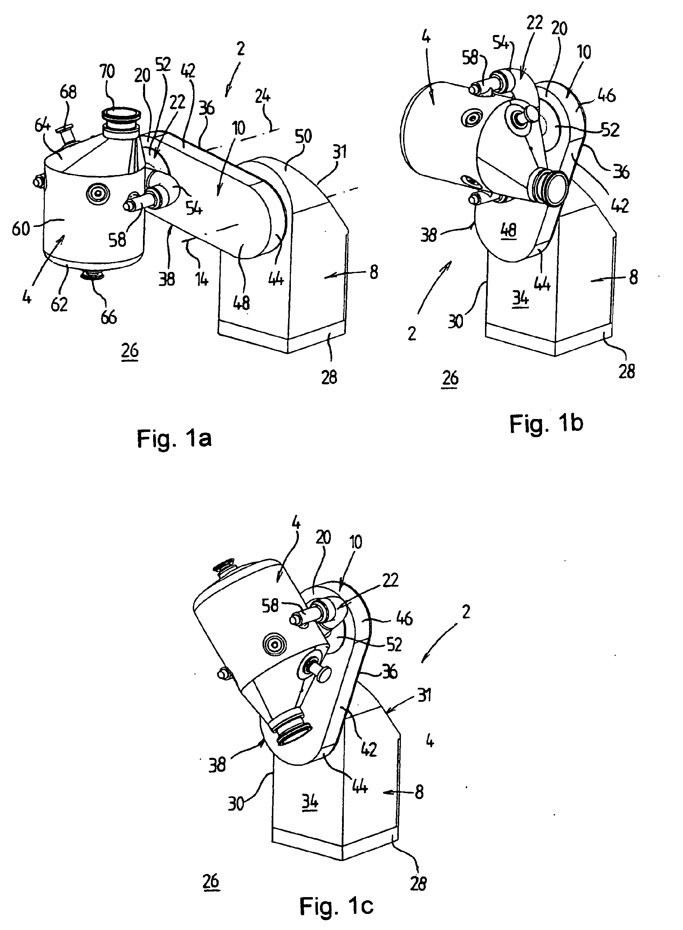

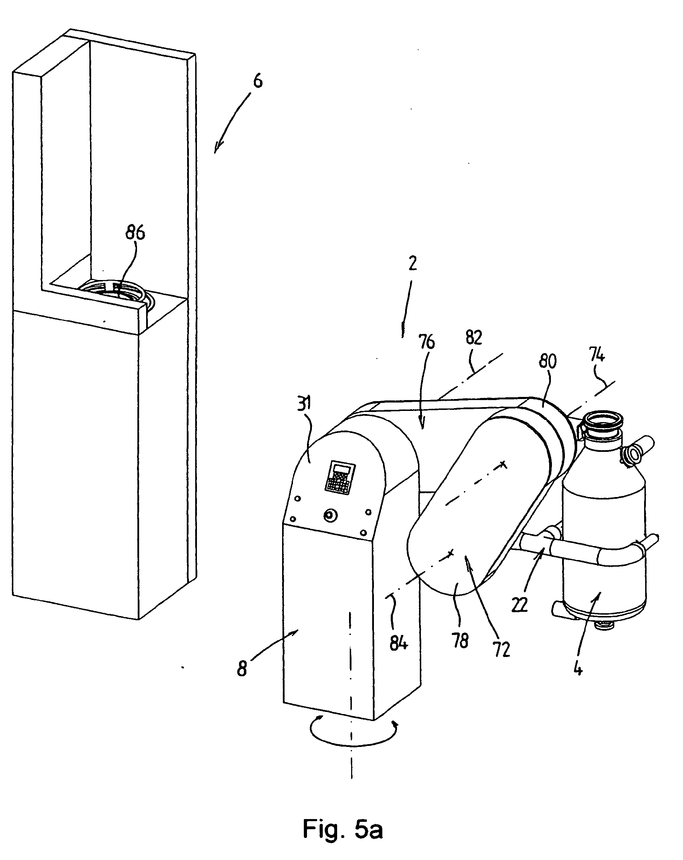

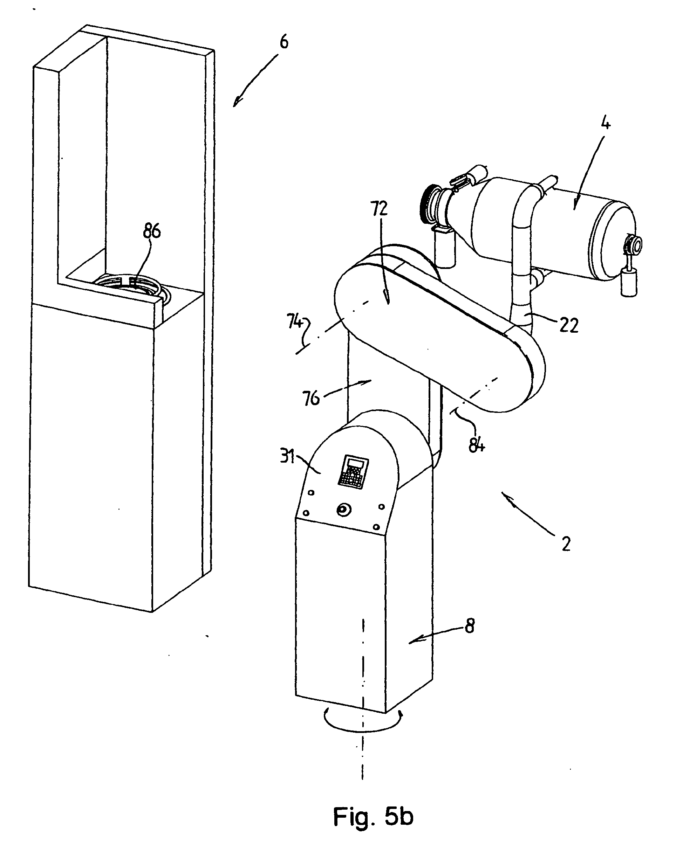

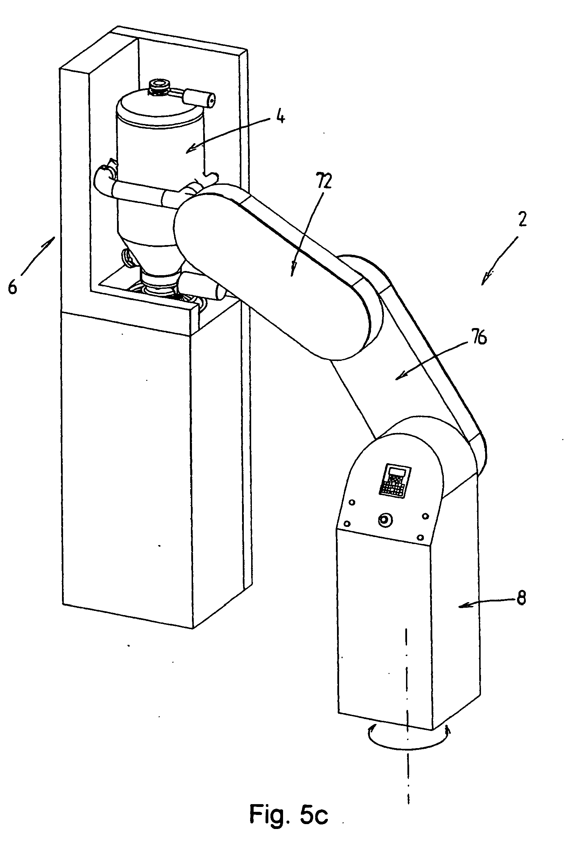

Die in der Zeichnung dargestellten Vorrichtungen 2 können in Reinraumumgebungen unter anderem in der pharmazeutischen Industrie eingesetzt werden, um schwere Behälter bei Bedarf anzuheben, abzusenken und/oder zu drehen. Die Vorrichtungen 2 dienen insbesondere dazu, einen in den Figuren 1 und 5 dargestellten, bereits in der EP 1 510 227 A1 oder der EP 1 449 543 A1 der Anmelderin beschriebenen Behälter 4 zur Behandlung und zum Transport von kleineren Gegenständen, wie Teilen von Spritzen, Vials für pharmazeutische Zwecke oder Stopfen von Infusionsflaschen, an einer Behandlungsstation zur Behandlung der kleineren Gegenstände im Behälter 4 oder an einer Abgabestation 6 (Figuren 5a bis c) zur Entleerung des Behälters 4 anzudocken bzw. wieder von der Station 6 abzunehmen, um den Behälter 4 beispielsweise auf einem Transportwagen abzusetzen. Die Vorrichtung 2 kann jedoch auch eingesetzt werden, um Fässer oder andere starre Behälter mit Wirkstoffen, Chemikalien oder anderen Substanzen zu versetzen und/oder zu entleeren.

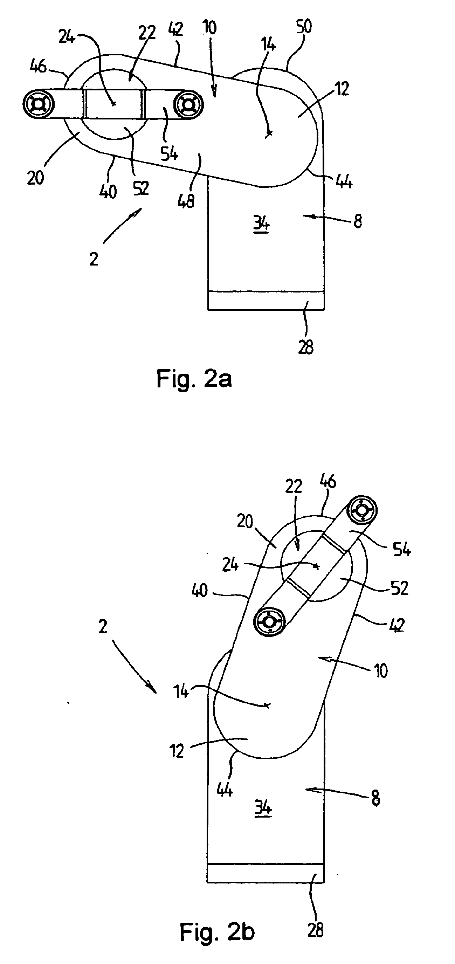

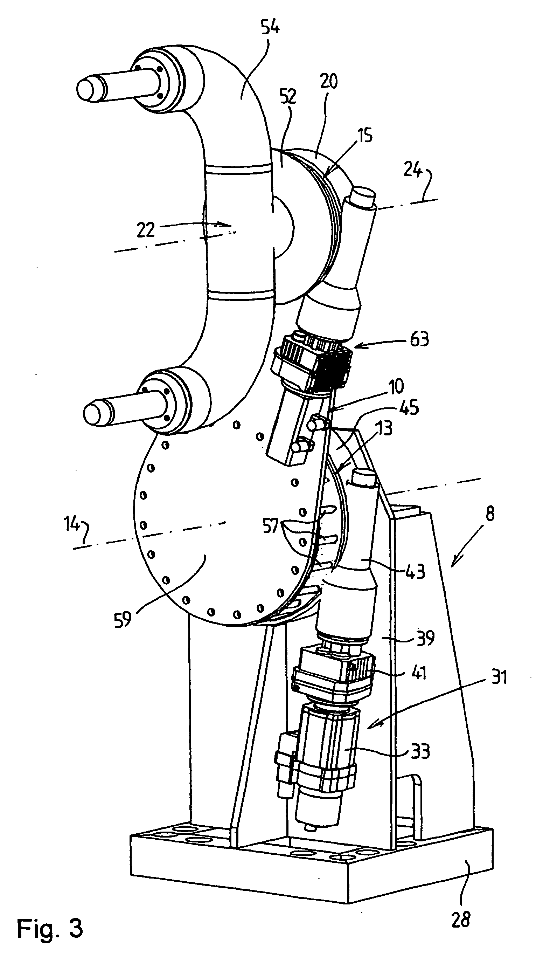

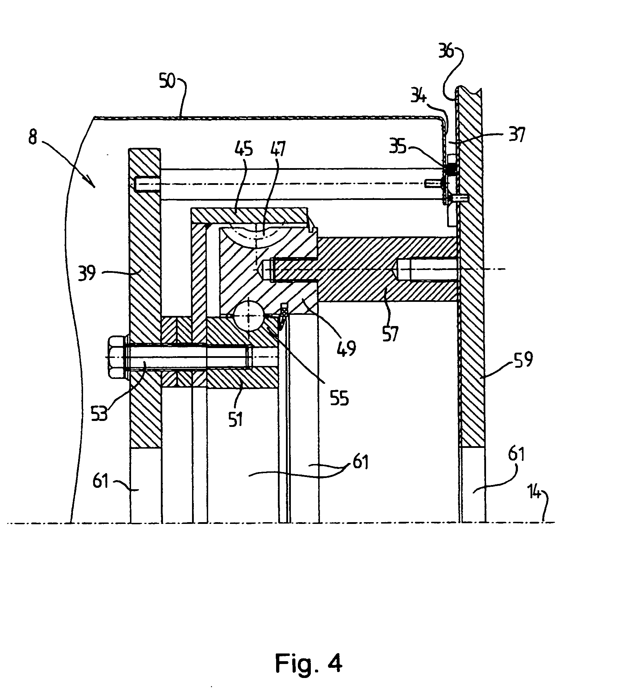

Die in den Figuren 1 bis 3 dargestellte Vorrichtung 2 besteht im Wesentlichen aus einer stabilen verwindungssteifen Tragsäule 8 und einem einzigen Gelenkarm 10, dessen eines Stirnende 12 über ein Drehgelenk 13 (Fig. 3 und 4) mit einer horizontalen Schwenkachse 14 schwenkbar mit der Tragsäule 8 verbunden ist und dessen anderes Stirnende 20 eine Halterung 22 für den Behälter 4 trägt, die über ein entsprechendes Drehgelenk 15 (Fig. 3) um eine horizontale Drehachse 24 schwenkbar mit dem Gelenkarm 10 verbunden ist.

Die dargestellte Tragsäule 8 besitzt einen quadratischen Querschnitt, jedoch kann sie alternativ auch einen im Wesentlichen kreisförmigen Querschnitt aufweisen. Bei dem in Fig. 1 bis 3 dargestellten Ausführungsbeispiel ist die Tragsäule 8 starr mit einem Boden 26 des Reinraums verbunden, jedoch kann sie in Bezug zum Boden 26 oder einer auf dem Boden angebrachten Grundplatte 28 um eine vertikale Drehachse drehbar sein, wie in den Figuren 5a bis 5c schematisch durch einen Pfeil angezeigt, wenn der Behälter 4 nicht nur in der in den Figuren 1a bis c dargestellten Bewegungsebene angehoben, abgesenkt und/oder gedreht, sondern darüber hinaus auch aus dieser Bewegungsebene heraus bewegt werden soll.

Die Tragsäule 8 besitzt ein geschlossenes Gehäuse 30, dessen oberes Stirnende einseitig abgeschrägt ist, um ein Bedienfeld 31 mit Bedienungselementen bereit zu stellen, beispielsweise mit einer Eingabetastatur, Schaltern, einer Anzeige oder dergleichen, wie bei der Vorrichtung 2 in den Figuren 5a bis c dargestellt. Mit den Bedienungselementen auf dem Bedienfeld 31 lässt sich eine im Innenraum der Tragsäule 8 untergebrachte Steuerung bedienen, mit der u.a. der Schwenkweg des Gelenkarms 10 und die Abstimmung der Schwenkbewegung des Gelenkarms 10 mit der Drehbewegung der Halterung 22 eingestellt werden kann.

Der Gelenkarm 10 ist an einer vom Bedienfeld 31 abgewandten Seite der Tragsäule 8 angelenkt, deren ebene vertikale Begrenzungswand 34 einer benachbarten ebenen vertikalen Begrenzungswand 36 eines geschlossenen Gehäuses 38 des Gelenkarms 10 in einem geringem Abstand gegenüberliegt. Zwischen der Außenseiten der beiden Begrenzungswände 34, 36 ist ein Dichtring 35 (Fig. 4) angeordnet, der einen Spalt 37 zwischen den beiden Begrenzungswänden 34, 36 um das Drehgelenk 13 herum abdichtet.

Wie am besten in Fig. 3 dargestellt, ist innerhalb des vom Gehäuse 38 umschlossenen Innenraums der Tragsäule 8 auf der Grundplatte 28 eine stabile vertikale Montageplatte 39 montiert, die auf ihrer dem Gelenkarm 10 zugewandten Seite einen zum Verschwenken des Gelenkarms 10 dienenden Drehantrieb 31 trägt. Der Drehantrieb 31 umfasst einen elektrischen Antriebsmotor 33 mit einem angeflanschten Untersetzungsgetriebe 41. Die Abtriebswelle des Untersetzungsgetriebes 41 trägt ein Schneckenrad (nicht sichtbar) einer Schneckengetriebestufe 43 des Drehantriebs 31, das innerhalb eines Gehäuses 45 des Drehgelenks 13 mit einer komplementären Verzahnung 47 (Fig. 4) eines Hohlrades 49 kämmt. Das Hohlrad 49 wird vom Außenring eines Wälzlagers 55 gebildet, dessen Innenring 51 durch Schrauben 53 mit der Montageplatte 39 verschraubt ist, während der Außenring 49 durch einen Kranz von Schraubenbolzen 57 drehfest mit einer stabilen Montageplatte 59 im Inneren des Gehäuses 38 des Gelenkarms 10 gekoppelt ist, so dass dieser letztere durch Stromzufuhr zum Antriebsmotor 33 in Bezug zur Tragsäule 8 im und entgegen dem Uhrzeigersinn verschwenkt werden kann.

Die Montageplatte 39, das Wälzlager 55, das Hohlrad 49, der Kranz von Schraubenbolzen 57, die Begrenzungswand 36, der Dichtring 35 und die Montageplatte 59 umschließen eine zur Drehachse 14 koaxiale Durchtrittsöffnung 61, durch welche die Innenräume der Tragsäule 8 und des Gelenkarms 10 miteinander kommunizieren, wobei sie durch den Dichtring 35 gegenüber der Reinraumumgebung abgedichtet werden. Durch die Öffnung 61 erstrecken sich auch Strom- und Steuerkabel (nicht dargestellt), die aus der Tragsäule 8 durch den Innenraum des Gelenkarms 10 bis zu einem Drehantrieb 63 der Halterung 22 verlaufen, so dass außerhalb der Gehäuse 30, 38 der Tragsäule 8 und des Gelenkarms 10 keine Kabel verlegt werden müssen.

Der Drehantrieb 63 ist auf der Montageplatte 59 befestigt und weist eine entsprechende Ausbildung wie der Drehantrieb 31 auf, kann jedoch kleiner dimensioniert werden. Die Drehantriebe 31 und 63 sind mit Positionsgebern versehen, die der Steuerung die jeweilige Dreh- bzw. Schwenklage des Drehgelenks 13 bzw. 15 übermitteln. Weiter ist die Montageplatte 59 an beiden Stirnenden mit Endschaltern (nicht sichtbar) versehen, die zur Begrenzung des maximalen Schwenkwegs des Gelenkarms 10 bzw. des maximalen Drehwinkels der Halterung 22 dienen.

Die Montageplatte 59 trägt außerdem Schraubhalterungen für einen Teil der zur Tragsäule 8 benachbarten Begrenzungswand 36 des Gehäuses 38 sowie für weitere Begrenzungswände 40, 42, 44, 46 an den Schmalseiten und an den Stirnseiten des Gehäuses 38 und einen Teil einer Begrenzungswand 48 auf der zur Begrenzungswand 36 entgegengesetzten Breitseite des Gehäuses 38, die von Edelstahlblechen gebildet werden und vom Innenraum des Gelenkarms 10 her an der Montageplatte 59 festgeschraubt sind. Dadurch stehen über die glatte äußere Oberfläche dieser Begrenzungswände 36, 40, 42, 44, 46, 48 keine Schraubenköpfe oder andere Vorsprünge über, auf denen sich Staub oder andere Verunreinigungen absetzen können. Ein Teil der beiden Begrenzungswände 36 und 48 an den Breitseiten des Gelenkarms 10 ist jeweils mit Hilfe von Magneten lösbar über einer in den Begrenzungswänden 36 und 48 ausgesparten Montageöffnung befestigt, die an der Seite der Tragsäule 8 einen Zugang zum Drehantrieb 31 und zu den dort angeordneten Schraubhalterungen und an der Seite der Halterung 22 einen Zugang zum Drehantrieb 63 und den dort angeordneten Schraubhalterungen bietet. Zuletzt werden die Fugen an den Rändern sämtlicher Begrenzungswände 36, 40, 42, 44, 46, 48 des Gehäuses 38 ebenso wie alle starren Fugen des Gehäuses 30 der Tragsäule 8 silikonisiert, d.h. mit einem elastischen Fugendichtmittel abgedichtet. Um die Anzahl der Fugen zu reduzieren, können die Begrenzungswände 40, 42, 44, 46 zusammen mit der Begrenzungswand 48 als einstückige Wanne ausgebildet sein, in welche die Montageplatte 59 zur Befestigung eingeklebt werden kann.

Das obere Stirnende des Gehäuses 30 der Tragsäule 8 ist an seiner Oberseite mit einer gerundeten Begrenzungswand 50 versehen, die ebenso wie die gerundeten Begrenzungswände 44, 46 an den Stirnenden des Gelenkarms 10 einem Absetzen von Staub oder anderen Verunreinigungen auf ihrer äußeren Oberfläche entgegen wirken.

Die zur Aufnahme der Behälter 4 dienende Halterung 22 besteht im Wesentlichen aus einer runden Montageplatte 52 und einer über die Montageplatte überstehenden Aufnahmegabel 54 mit zwei parallelen Gabelarmen, die sich in zwei komplementäre Aufnahmebuchsen 58 des Behälters 4 einführen lassen, wie in den Figuren 1a bis c dargestellt.

Die Montageplatte 52 weist eine zur vertikalen Außenseite der Begrenzungswand 48 parallele Rückseite auf, die in einem geringen Abstand von der Außenseite der Begrenzungswand 48 angeordnet ist und durch einen Kranz von Schrauben mit einem Hohlrad des Drehgelenks 15 verbunden ist, das einen gleichen oder ähnlichen Aufbau wie das Drehgelenk 13 besitzt. Zwischen der Außenseite der Begrenzungswand 48 und der Rückseite der Montageplatte 52 ist ebenfalls ein Dichtring (nicht sichtbar) angeordnet, der ähnlich wie der Dichtring 35 des Drehgelenks 13 für eine Abdichtung des Spaltes zwischen der Rückseite der Montageplatte 52 und der Außenseite der Begrenzungswand 48 des Gelenkarms 10 sorgt.

Der lösbar an der Halterung 22 befestigbare Behälter 4 besteht im Wesentlichen aus einem zylindrischen Mittelteil 60, einem flachen Bodenteil 62 und einem schrägen konischen Oberteil 64. Der Bodenteil 62 und der Oberteil 64 sind jeweils mit einem verschließbaren Anschluss 66, 68 zur Zufuhr bzw. Abfuhr von Dampf, Wasser oder anderen Behandlungsmedien in den Behälter 4 versehen. Weiter ist der Oberteil 64 an seiner Spitze mit einer verschließbaren Befüll- und Entleersöffnung 70 versehen, wie ausführlich in der EP 1 510 227 A1 beschrieben und dargestellt.

Wie in den Figuren 1a bis c dargestellt, kann ein solcher in aufrechter Stellung (Fig. 1a) in der Halterung 22 der Vorrichtung 2 aufgenommener Behälter 4 durch Verschwenken des Gelenkarms 10 in Bezug zur Tragsäule 8 angehoben und mit einer der Schwenkrichtung des Gelenkarms 10 entsprechenden Drehrichtung um die horizontale Drehachse 24 der Halterung 22 in eine Stellung (Fig. 1c) gedreht werden, in der sich seine Befüll- und Entleeröffnung 70 im Wesentlichen in derselben Höhe wie zuvor befindet, jedoch nach unten weist, so dass die im Behälter 4 befindlichen kleineren Gegenstände beim Öffnen der Befüll- und Entleeröffnung 70 durch ihre Schwerkraft aus dem Behälter 4 ausgetragen werden, wie dies ausführlicher ebenfalls in der EP 1 510 227 A1 beschrieben und dargestellt ist.

Alternativ kann der Behälter 4 jedoch auch durch Verschwenken des Gelenkarms 10 in einer Schwenkrichtung und Drehen der Halterung 22 mit entgegengesetzter Drehrichtung derart angehoben werden, dass er seine aufrechte Stellung stets beibehält, zum Beispiel um ihn in einer geeigneten Halterung eines Transportwagens abzusetzen.

Allgemein kann die Ausrichtung des Behälters 4 entlang des Schwenkwegs des Gelenkarms 10 in einer beliebigen gewünschten Weise verändert werden, indem die beiden Drehantriebe des Gelenkarms 10 und der Halterung 22 entsprechend angesteuert werden.

Im Unterschied zu der Vorrichtung aus den Figuren 1 bis 3 ist bei der in den Figuren 5a bis c dargestellten Vorrichtung 2 die drehbare Halterung 22 zur Aufnahme eines Behälters 4 nicht am freien Ende eines unmittelbar mit der Tragsäule 8 verbundenen Gelenkarms 10 angebracht, sondern am freien Stirnende 78 eines zweiten zusätzlichen Gelenkarms 72, der seinerseits motorisch um eine horizontale Schwenkachse 74 verschwenkbar an dem von der Tragsäule 8 abgewandten Stirnende 80 des um eine Schwenkachse 82 schwenkbar an der Tragsäule 8 angelenkten ersten Gelenkarms 76 montiert ist.

Die Konstruktion des Gelenkarms 72, des Drehgelenks zwischen den beiden Gelenkarmen 76 und 72 und eines Drehantriebs zum Verschwenken des Gelenkarms 72 entspricht im Wesentlichen der Konstruktion des Gelenkarms 10, des Drehgelenks 13 zwischen der Tragsäule 8 und dem Gelenkarm 10 und des Drehantriebs 31 der Vorrichtung 2 aus den Figuren 1 bis 3. Der Gelenkarm 72 ist auf der zur Tragsäule 8 benachbarten Breitseite des ersten Gelenkarms 76 angebracht, um das Drehmoment zu minimieren, das vom Behälter 4 und den beiden Gelenkarmen 76, 72 in einer zu den Schwenkachsen 74, 82 und der Drehachse 84 der Halterung 22 parallelen vertikalen Ebene durch die Mitte der Tragsäule 8 auf diese ausgeübt wird.

Durch Verwendung von zwei Gelenkarmen 76, 72 kann nicht nur die Reichweite der Vorrichtung 2 in vertikaler und horizontaler Richtung vergrößert werden, sondern durch eine entsprechende Ansteuerung der Drehantriebe der beiden Gelenkarme 76, 72 der Behälter 4 in der in Fig. 5a bis c dargestellten, zu den Achsen 74, 82, 84 senkrechten Bewegungsebene zumindest in einem begrenzten Bereich entlang einer geraden Bewegungsbahn bewegt werden, zum Beispiel um den Behälter 4 mit nach unten weisender Befüll- und Entleeröffnung 70 vertikal von oben her an die nach oben weisende Aufnahmeöffnung 86 der Entleerstation 6 anzunähern und an diese anzudocken, oder um den Behälter 4 vor dem Absetzen auf einem Transportwagen horizontal über den Transportwagen zu bewegen. Allgemein kann der Behälter 4 entlang einer beliebigen gewünschten Bahn bewegt werden, indem die Drehantriebe der beiden Gelenkarme 76, 72 gleichzeitig oder getrennt nacheinander mit gleicher oder unterschiedlicher Drehrichtung und Drehgeschwindigkeit angesteuert werden.

Beide Vorrichtungen 2 sind so ausgebildet, dass eine gewünschte Bewegung des Behälters 4 durch eine entsprechende manuelle Ansteuerung der Drehantriebe am Bedienfeld 31 ausgeführt und sowohl der Bewegungsweg des Behälters 4 als auch Drehbewegungen der Halterung 22 mit Hilfe der Positionsgeber in der Steuerung gespeichert werden können. Anschließend kann dann der gespeicherte Bewegungsablauf durch einen entsprechenden Befehl an die Steuerung, welche die Drehantriebe der Drehgelenke über einen Frequenzumrichter steuert, automatisch ausgeführt werden.

## Patentansprüche

1. Vorrichtung zum Anheben und Drehen von Behältern (4) in einer Reinraumumgebung, mit einer ortsfesten Tragsäule (8) und einer Halterung (22) zur Aufnahme eines Behälters (4), die in Bezug zur Tragsäule (8) auf und ab beweglich und um eine horizontale Drehachse (24) drehbar ist, wobei zwischen der Tragsäule (8) und der Halterung (22) ein einziger Gelenkarm (10) angeordnet ist, der an seinem einen Stirnende (12) durch ein erstes Drehgelenk (13) schwenkbar mit der Tragsäule (8) verbunden ist und an seinem entgegengesetzten Stirnende (20) die Halterung (22) trägt, die durch ein zweites Drehgelenk (15) mit dem Gelenkarm (10) verbunden ist, wobei das erste Drehgelenk (13) einen ersten elektrischen Drehantrieb (31) umfasst, mit dem der Gelenkarm (10) in Bezug zur Tragsäule (8) um eine im Abstand von der Drehachse (24) der Halterung (22) angeordnete horizontale Schwenkachse (14) verschwenkbar ist, und wobei sich ein in die Halterung (22) aufgenommener Behälter (4) durch Verschwenken des Gelenkarms (10) in einer Schwenkrichtung und Drehen der Halterung (22) in einer dazu entgegengesetzten Drehrichtung unter Beibehaltung seiner Drehausrichtung anheben lässt, **dadurch gekennzeichnet, dass** das zweite Drehgelenk (15) einen zweiten elektrischen Drehantrieb (63) zum Umdrehen des in der Halterung (22) aufgenommenen Behälters (4) durch Drehung um die horizontale Drehachse (24) der Halterung (22) umfasst.

2. Vorrichtung nach Anspruch 1, **dadurch gekennzeichnet, dass** die Tragsäule (8) und der Gelenkarm (10) vollständig mit Blechen (34, 36, 40, 42, 44, 46, 48, 50) aus Edelstahl verkleidet sind.

3. Vorrichtung nach Anspruch 1 oder 2, **dadurch gekennzeichnet, dass** die Tragsäule (8) und der Gelenkarm (10) jeweils ein Gehäuse (30, 38) mit glatten äußeren Oberflächen ohne überstehende Vorsprünge aufweisen.

4. Vorrichtung nach einem der vorangehenden Ansprüche, **dadurch gekennzeichnet, dass** die Tragsäule (8) und der Gelenkarm (10) kommunizierende Innenräume umschließen, die von geschlossenen und zur Reinraumumgebung hin abgedichteten Begrenzungswänden (34, 36, 40, 42, 44, 46, 48, 50) umgeben sind.

5. Vorrichtung nach Anspruch 4, **dadurch gekennzeichnet, dass** mindestens ein Teil der Begrenzungswände (34, 36, 40, 42, 44, 46, 48, 50) mit Magneten befestigt ist.

6. Vorrichtung nach einem der vorangehenden Ansprüche, **dadurch gekennzeichnet, dass** die Tragsäule (8) an ihrem oberen Stirnende eine konvex gerundete Begrenzungswand (50) aufweist, und dass der Gelenkarm (10) an seinen entgegengesetzten Stirnenden konvex gerundete Begrenzungswände (44, 46) aufweist.

7. Vorrichtung nach einem der vorangehenden Ansprüche, **dadurch gekennzeichnet, dass** der Gelenkarm (10) an einer Seite der Tragsäule (8) angelenkt ist, dass die Halterung (22) über eine von der Tragsäule (8) abgewandte Seite des Gelenkarms (10) übersteht, und dass die Schwenkachse (14) und die Drehachse (24) zu diesen Seiten senkrecht sind.

8. Vorrichtung nach einem der vorangehenden Ansprüche, **dadurch gekennzeichnet, dass** sich im Bereich der Drehgelenke (13, 15) zwei im Wesentlichen parallele äußere Oberflächen der gelenkig miteinander verbundenen Komponenten (8, 10; 10, 52) in einem geringen Abstand gegenüberliegen, und dass zwischen den Oberflächen jeweils mindestens ein Dichtring (35) angeordnet ist.

9. Vorrichtung nach Anspruch 8, **dadurch gekennzeichnet, dass** der Dichtring (35) konzentrisch zur Schwenkachse (14, 24) des jeweiligen Drehgelenks (13, 15) ist.

10. Vorrichtung nach Anspruch 8 oder 9, **dadurch gekennzeichnet, dass** die Dichtringe (35) kommunizierende Innenräume der Tragsäule (8) und des Gelenkarms(10) zur Reinraumumgebung hin abdichten.

11. Vorrichtung nach einem der vorangehenden Ansprüche, **dadurch gekennzeichnet, dass** die Drehantriebe (31, 63) Positionsgeber umfassen.

12. Vorrichtung nach einem der vorangehenden Ansprüche, **dadurch gekennzeichnet, dass** die Drehantriebe (31, 63) eine Getriebestufe mit selbsthemmenden Eigenschaften umfassen.

13. Vorrichtung nach einem der vorangehenden Ansprüche, **dadurch gekennzeichnet, dass** Stromversorgungs- und Steuerkabel für die Drehantriebe (31, 63) der Drehgelenke (13, 15) vollständig im Inneren der Tragsäule (8) und im Inneren des Gelenkarms (10) verlegt sind.

14. Vorrichtung nach einem der vorangehenden Ansprüche, **dadurch gekennzeichnet, dass** mindestens ein Teil der Tragsäule (8) um eine vertikale Achse drehbar ist.

## Claims

1. Apparatus for the lifting and turning of containers (4) in a clean-room environment, with a fixed carrying column (8) and with a mounting (22) for receiving a container (4), which mounting is moveable up and down and rotatable about a horizontal axis of rotation (24) with respect to the carrying column (8), there being arranged between the carrying column (8) and the mounting (22) a single articulated arm (10) which at one fore-end (12) is connected pivotably to the carrying column (8) by means of a first rotary joint (13) and at its opposite fore-end (20) carries the mounting (22) which is connected to the articulated arm (10) by means of a second rotary joint (15), the first rotary joint (13) comprising a first electric rotary drive (31), by means of which the articulated arm (10) is pivotable with respect to the carrying column (8) about a horizontal pivot axis (14) arranged at a distance from the axis of rotation (24) of the mounting (22), and a container (4) which is received in the mounting (22) being capable of being lifted by the pivoting of the articulated arm (10) in a pivoting direction and by the rotation of the mounting (22) in a direction of rotation opposite to this, the rotary orientation of the said container being maintained, **characterized in that** the second rotary joint (15) comprises a second electric rotary drive (63) for overturning the container (4) received in the mounting (22) by rotation about the horizontal axis of rotation (24) of the mounting (22).

2. Apparatus according to Claim 1, **characterized in that** the carrying column (8) and the articulated arm (10) are fully clad with plates (34, 36, 40, 42, 44, 46, 48, 50) consisting of high-grade steel.

3. Apparatus according to Claim 1 or 2, **characterized in that** the carrying column (8) and the articulated arm (10) have in each case a housing (30, 38) with smooth outer surfaces without protruding projections.

4. Apparatus according to one of the preceding claims, **characterized in that** the carrying column (8) and the articulated arm (10) enclose communicating inner spaces which are surrounded by closed boundary walls (34, 36, 40, 42, 44, 46, 48, 50) sealed off with respect to the clean-space environment.

5. Apparatus according to Claim 4, **characterized in that** at least some of the boundary walls (34, 36, 40, 42, 44, 46, 48, 50) are fastened by means of magnets.

6. Apparatus according to one of the preceding claims, **characterized in that** the carrying column (8) has a convexly rounded boundary wall (50) at its upper fore-end, and **in that** the articulated arm (10) has convexly rounded boundary walls (44, 46) at its opposite fore-ends.

7. Apparatus according to one of the preceding claims, **characterized in that** the articulated arm (10) is articulated on one side of the carrying column (8), **in that** the mounting (22) protrudes beyond a side of the articulated arm (10) which faces away from the carrying column (8), and **in that** the pivot axis (14) and the axis of rotation (24) are perpendicular to these sides.

8. Apparatus according to one of the preceding claims, **characterized in that**, in the region of the rotary joints (13, 15) two essentially parallel outer surfaces of the components (8, 10; 10, 52) connected in an articulated manner to one another lie at a short distance opposite one another, and **in that** in each case at least one sealing ring (35) is arranged between the surfaces.

9. Apparatus according to Claim 8, **characterized in that** the sealing ring (35) is concentric to the pivot axis (14, 24) of the respective rotary joint (13, 15).

10. Apparatus according to Claim 8 or 9, **characterized in that** the sealing rings (35) seal off communicating inner spaces of the carrying column (8) and of the articulated arm (10) with respect to the clean-room environment.

11. Apparatus according to one of the preceding claims, **characterized in that** the rotary drives (31, 63) comprise position encoders.

12. Apparatus according to one of the preceding claims, **characterized in that** the rotary drives (31, 63) comprise a gear stage having self-locking properties.

13. Apparatus according to one of the preceding claims, **characterized in that** power supply and control cables for the rotary drives (31, 63) of the rotary joints (13, 15) are laid completely inside the carrying column (8) and inside the articulated arm (10).

14. Apparatus according to one of the preceding claims, **characterized in that** at least part of the carrying column (8) is rotatable about a vertical axis.

## Revendications

1. Dispositif pour lever et tourner des conteneurs (4) dans un environnement de salle blanche, comprenant une colonne porteuse fixe (8) et une fixation (22) pour recevoir un conteneur (4), laquelle peut tourner autour d'un axe de rotation horizontal (24) et se déplacer de haut en bas par rapport à la colonne porteuse (8), un bras articulé unique (10) étant disposé entre la colonne porteuse (8) et la fixation (22), lequel est connecté à l'une de ses extrémités frontales (12) par une première articulation rotative (13) de manière pivotante à la colonne porteuse (8) et porte à son extrémité frontale opposée (20) la fixation (22) qui est connectée au bras articulé (10) par une deuxième articulation rotative (15), la première articulation rotative (13) comprenant un premier entraînement en rotation électrique (31), avec lequel le bras articulé (10) peut être pivoté par rapport à la colonne porteuse (8) autour d'un axe de pivotement horizontal (14) disposé à distance de l'axe de rotation (24) de la fixation (22), et un conteneur (4) reçu dans la fixation (22) pouvant être levé par pivotement du bras articulé (10) dans une direction de pivotement et par rotation de la fixation (22) dans une direction de rotation opposée, en conservant son orientation de rotation, **caractérisé en ce que** la deuxième articulation rotative (15) comprend un deuxième entraînement en rotation électrique (63) pour faire tourner le conteneur (4) reçu dans la fixation (22) par rotation autour de l'axe de rotation horizontal (24) de la fixation (22).

2. Dispositif selon la revendication 1, **caractérisé en ce que** la colonne porteuse (8) et le bras articulé (10) sont complètement revêtus de tôles (34, 36, 40, 42, 44, 46, 48, 50) en acier spécial.

3. Dispositif selon la revendication 1 ou 2, **caractérisé en ce que** la colonne porteuse (8) et le bras articulé (10) présentent chacun un boîtier (30, 38) avec des surfaces extérieures lisses sans saillies qui dépassent.

4. Dispositif selon l'une quelconque des revendications précédentes, **caractérisé en ce que** la colonne porteuse (8) et le bras articulé (10) renferment des espaces internes qui communiquent, qui sont entourés par des parois de limitation (34, 36, 40, 42, 44, 46, 48, 50) fermées et rendues étanches par rapport à l'environnement de salle blanche.

5. Dispositif selon la revendication 4, **caractérisé en ce qu'**au moins une partie des parois de limitation (34, 36, 40, 42, 44, 46, 48, 50) est fixée avec des aimants.

6. Dispositif selon l'une quelconque des revendications précédentes, **caractérisé en ce que** la colonne porteuse (8) présente, à son extrémité frontale supérieure, une paroi de limitation arrondie convexe (50), et **en ce que** le bras articulé (10) présente, à ses extrémités frontales opposées, des parois de limitation arrondies convexes (44, 46).

7. Dispositif selon l'une quelconque des revendications précédentes, **caractérisé en ce que** le bras articulé (10) est articulé à un côté de la colonne porteuse (8), **en ce que** la fixation (22) dépasse au-delà d'un côté du bras articulé (10) opposé à la colonne porteuse (8) et **en ce que** l'axe de pivotement (14) et l'axe de rotation (24) sont perpendiculaires à ces côtés.

8. Dispositif selon l'une quelconque des revendications précédentes, **caractérisé en ce que** deux surfaces extérieures essentiellement parallèles des composants (8, 10 ; 10, 52) connectés de manière articulée les uns aux autres sont en regard l'une de l'autre à faible distance dans la région des articulations rotatives (13, 15), et **en ce qu'**entre les surfaces est disposée à chaque fois au moins une bague d'étanchéité (35).

9. Dispositif selon la revendication 8, **caractérisé en ce que** la bague d'étanchéité (35) est concentrique à l'axe de pivotement (14, 24) de l'articulation rotative respective (13, 15).

10. Dispositif selon la revendication 8 ou 9, **caractérisé en ce que** les bagues d'étanchéité (35) étanchéifient des espaces internes communiquant de la colonne porteuse (8) et du bras articulé (10) par rapport à l'environnement de salle blanche.

11. Dispositif selon l'une quelconque des revendications précédentes, **caractérisé en ce que** les entraînements en rotation (31, 63) comprennent des détecteurs de position.

12. Dispositif selon l'une quelconque des revendications précédentes, **caractérisé en ce que** les entraînements en rotation (31, 63) comprennent un étage d'engrenage avec des propriétés autobloquantes.

13. Dispositif selon l'une quelconque des revendications précédentes, **caractérisé en ce que** des câbles d'alimentation en courant et des câbles de commande pour les entraînements en rotation (31, 63) des articulations rotatives (13, 15) sont posés complètement à l'intérieur de la colonne porteuse (8) et à l'intérieur du bras articulé (10).

14. Dispositif selon l'une quelconque des revendications précédentes, **caractérisé en ce qu'**au moins une partie de la colonne porteuse (8) peut tourner autour d'un axe vertical.
